# EUROPEAN PATENT APPLICATION

(11) **EP 2 447 765 A2**
(43) Date of publication of application: **02.05.2012**
(21) Application number: 10792253.6
(22) Date of filing: 13.04.2010
(51) Int. Cl.: G02F 1/1333, G02F 1/1345

(54) **APPARATUS FOR COUPLING A MODULE CIRCUIT BOARD AND A FRAME TOGETHER, AND BACKLIGHT USING SAME**

(30) Priority: 24.06.2009 KR 20090056649
(71) Applicant: LPoint Co., Ltd., Ansa-si, Gyeonggi-do 425-836 (KR)
(72) Inventor: LEE, Jong Eun, Bucheong-si, 420-020 Gyeonggi-do (KR)
(74) Representative: Delorme, Nicolas
(86) International application number: PCT/KR2010/002278
(87) International publication number: WO 2010/150971

(57) **Abstract**

A device for coupling a module circuit board and a frame includes: a module circuit board on which light emitting diodes (LEDs) are installed to have a certain pattern; and a frame coupled with the module circuit board by a coupling unit, wherein the coupling unit includes coupling recesses formed on a rear surface of the module circuit board and coupling members formed on the frame and coupled with the coupling recesses.

## Description

### [Technical Field]

The present invention relates to a backlight and, more particularly, to a device for coupling a module circuit board including light emitting diodes and a frame with an enhanced coupling structure, and a backlight using the same.

### [Background Art]

A rapid development in the semiconductor technology has prompted flat panel display devices to be smaller and more lightweight and demand for flat panel display devices having improved performance such as resolution, luminance, contrast, and the like, of images is explosively increasing.

Among the flat panel display devices, liquid crystal display (LCD), plasma display, organic EL display, and LED display which have recently come to prominence are advantageous in terms of flat panel, low power consumption, or the like, so they are considered as substitutes that may be able to overcome the shortcomings of the existing Braun Tube (or cathode ray tube (CRT)).

Among the foregoing flat panel display devices, the LCD is a light receiving type light emitting device which forms an image upon receiving light from the outside, an image cannot be seen in a dark environment. In order to overcome this problem, rather than emitting light by itself to form an image, a backlight is installed on a rear surface thereof to irradiate light to allow for viewing of an image in a dark environment.

The backlight for irradiating light to the LCD includes an edge type backlight for irradiating light from the lateral side of a panel and a direct type backlight for irradiating light from a rear surface.

An example of such a backlight, i.e., a surface light source device, is disclosed in Japanese Patent Laid-Open Publication No. 60-216435. In the surface light source device, barrier ribs are alternately installed within a container having an airtight space region to form a discharge space having a meandering shape, and electrodes are installed at both end portions of the discharge space. A phosphor layer is formed on upper and lower portions of the discharge space.

In the related art surface light source device having such a configuration, when a certain potential is applied to the electrodes, a glow discharge occurs in the discharge space to generate light, making ultraviolet ray of light excite the phosphor layer to emit light from the phosphor layer.

However, the backlight has problems in that light emission at the edge portion of the discharge space is weak, failing to obtain uniform luminance, high voltage is required for discharging, and the electrodes are easily degraded.

In an effort to resolve the problems, research into a backlight using light emitting diode (LED) modules which has relatively high luminance and is able to enhance white balance characteristics is actively ongoing.

However, although the backlight using LED modules is advantageous of making an LED device thinner, since the LED modules are formed as thin plates and a relatively great amount of heat is generated, it is not easy to fix the modules and dissipate heat.

The LED modules used in a backlight has a structure in which a plurality of LEDs are installed on a circuit board, in particular, a metal circuit board. The LED modules are fixed to a frame by a set screw. The fixing of the LED modules to the frame using a set screw does not provide good coupling characteristics, a large number of operations and men per hour, and in addition, enhancement of productivity cannot be sought.

Also, in the case of the LED modules, as described above, a relatively large amount of heat is generated from the LEDs, requiring a heat dissipation unit to cool them, and here, the presence of the heat dissipation unit makes a major obstacle toward reducing the thickness of the backlight as well as the thickness of a display.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

The present invention has been made in an effort to provide a device for coupling a module circuit board and a frame having advantages of enhancing coupling force between a module circuit board with light emitting diodes (LEDs) installed thereon and a frame and fixing them without any wobble, and a backlight using the same.

The present invention has also been made in an effort to provide a backlight using a device for coupling a module circuit board with LEDs installed thereon and a frame having advantages of enhancing picture quality by irradiating uniform light from a lateral side or a rear side of a liquid crystal module.

### [Technical Solution]

An exemplary embodiment of the present invention provides a device for coupling a module circuit board and a frame, including: a module circuit board on which light emitting diodes (LEDs) are installed to have a certain pattern; and a frame coupled with the module circuit board by a coupling unit, wherein the coupling unit includes coupling recesses formed on a rear surface of the module circuit board and coupling members formed on the frame and coupled with the coupling recesses.

The coupling member includes a protrusion protruded from the frame and a coupling projection formed on at least one side of the protrusion, and the coupling recess installed on the module circuit board includes an insertion portion into which the coupling member is inserted and a stopping recess portion extending from the insertion portion in one direction and allowing the protrusion to be caught therein.

A section of the mutually coupled coupling member and coupling recess have any one shape among a frustotriangular shape, a circular shape, a T shape, a lozenge shape, and a trapezoid shape.

A stopper is provided on the frame to fix the coupling position of the module circuit board.

Alternatively, the device for coupling a module circuit board and a frame includes: a module circuit board having a bar-like shape and having light emitting diodes (LEEDs) installed to have a certain pattern; and a frame coupled with the module circuit board by a coupling unit, wherein the coupling unit includes lead-in recesses for a coupling and formed on both side surface portions in a lengthwise direction of the module circuit board and coupling hooks provided on the frame corresponding to the lead-in recesses and inserted in the lead-in recesses to allow a side edge of the module circuit board to be caught therein when the module circuit board is moved.

The coupling hooks include a stopping protrusion formed at a mutually corresponding inner side, and the lead-in recess formed on the side face portion of the module circuit board includes an insertion portion in which the coupling hook is inserted and a stopping recess extending from the insertion portion in one direction and allowing the stopping protrusion to be insertedly caught therein.

A heat dissipation fin or a heat pipe is installed on the frame in order to dissipate heat generated from the LEDs.

Another embodiment of the present invention provides a backlight using a device for coupling a module circuit board and a frame, including: a frame for supporting a liquid crystal display panel; a module circuit board coupled with the frame and including a plurality of light emitting diodes (LEDs) to irradiate light to the liquid crystal display panel; a coupling unit for coupling the module circuit board and the frame; and a light guide plate unit irradiating light emitted from the LEDs of the module circuit board, toward the liquid crystal display panel, wherein the coupling unit includes a coupling recess formed on a rear surface of the circuit board and a coupling member formed on the frame and coupled with the coupling recess.

Alternatively, the backlight using a device for coupling a module circuit board and a frame, includes: a frame for supporting a liquid crystal display panel; a module circuit board coupled with the frame and including a plurality of light emitting diodes (LEDs) to irradiate light to the liquid crystal display panel; a coupling unit for coupling the module circuit board and the frame; and a light guide plate unit irradiating light emitted from the LEDs of the module circuit board, toward the liquid crystal display panel, wherein the coupling unit includes lead-in recesses for a coupling and formed on both side surface portions in a lengthwise direction of the module circuit board and coupling hooks provided on the frame corresponding to the lead-in recesses and inserted in the lead-in recesses to allow a side edge of the module circuit board to be caught therein when the module circuit board is moved.

### [Advantageous Effects]

The device for coupling a module circuit board and a frame and the backlight using the same can enhance bonding force between the frame and the module circuit board to thus enhance reliability according to coupling of the frame and the module circuit board, and can be formed to make an LCD device thinner.

Also, the number of operations and men per hour according to the coupling of the module circuit board and a sash, thus enhancing productivity.

### [Description of the Drawings]

FIG. 1 is a partially cut-out perspective view of a liquid crystal display (LCD) device including a backlight using a device for coupling a module circuit board and a frame according to an embodiment of the present invention;
FIG. 2 is an exploded perspective view showing the device for coupling a module circuit board and a frame;
FIG. 3 is a perspective view showing a coupling recess of the mobile circuit board;
FIG. 4 is a coupled sectional view of the module circuit board and the frame;
FIG. 5 is a perspective view showing another example of a coupling recess formed on the module circuit board;
FIG. 6 is an exploded perspective view showing another example of the coupling unit for coupling the module circuit board and the frame;
FIG. 7 is a coupling sectional view of the module circuit board and the frame illustrated in FIG. 6;
FIG. 8 is an exploded perspective view showing another example of the coupling unit for coupling the module circuit board and the frame;
FIGS. 9 and 10 are exploded perspective views showing other examples of the coupling unit for coupling the module circuit board and the frame;
FIG. 11 is an exploded perspective view showing another example of the coupling unit for coupling the module circuit board and the frame;
FIG. 12 is a sectional view of the coupling unit illustrated in FIG. 11.
FIGS. 13 and 14 are exploded perspective views showing other examples of the coupling unit for coupling the module circuit board and the frame;
   FIG. 15 is an exploded perspective view showing another example of the coupling unit for coupling the module circuit board and the frame;
   FIG. 16 is a sectional view of the module circuit board and the frame illustrated in FIG. 15 as coupled by the coupling unit;
   FIG. 17 is a plan view of the module circuit board and the frame illustrated in FIG. 15 as coupled by the coupling unit;
   FIG. 18 is an exploded perspective view showing another example of the coupling unit for coupling the module circuit board and the frame;
   FIG. 19 is a sectional view of the module circuit board and the frame illustrated in FIG. 18 as coupled by the coupling unit;
   FIG. 20 is a plan view of the module circuit board and the frame illustrated in FIG. 18 as coupled by the coupling unit;
   FIG. 21 is an exploded perspective view showing another example of the coupling unit for coupling the module circuit board and the frame;
   FIG. 22 is a sectional view of the module circuit board and the frame illustrated in FIG. 21 as coupled by the coupling unit;
   FIG. 23 is a side view showing a coupled state of the module circuit board and the frame illustrated in FIG. 21 by the coupling unit;
   FIG. 24 is a perspective view showing another example of the coupling unit according to an embodiment of the present invention;
   FIG. 25 is a sectional view of the coupling unit illustrated in FIG. 24; FIG. 26 is an exploded perspective view showing another example of the device for coupling the module circuit board and the frame;
   FIG. 27 is a sectional view of the device for coupling the module circuit board and the frame illustrated in FIG. 26;
FIGS. 28 and 29 are exploded perspective view showing another examples of the device for coupling the module circuit board and the frame; and
FIG. 30 is a perspective view showing another example of a backlight using the device for coupling the module circuit board and the frame according to an embodiment of the present invention.

### [Mode for Invention]

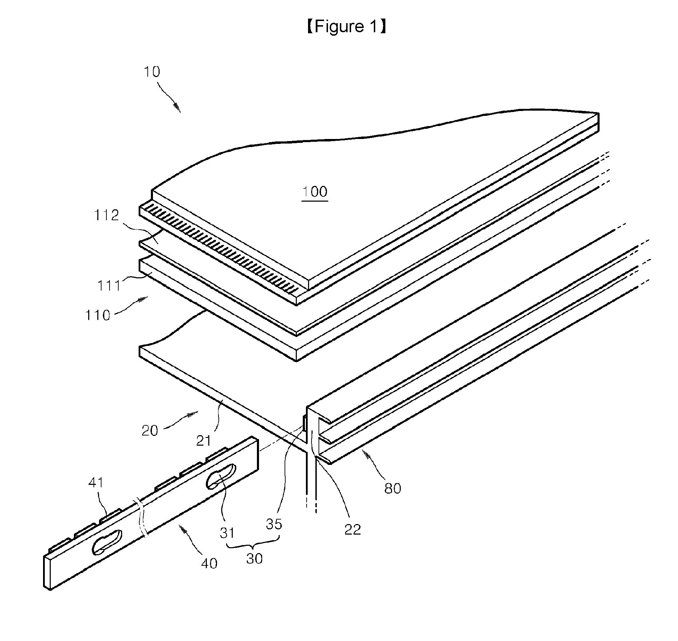

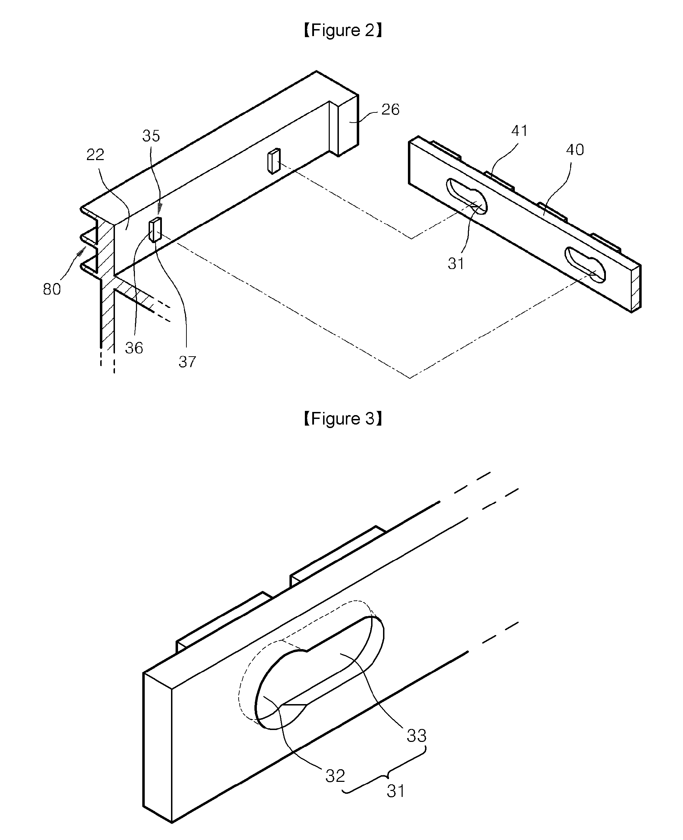

FIGS. 1 and 2 shows a backlight used as a light source in a liquid crystal display (LCD) device according to an embodiment of the present invention, which has a coupling structure in which a module circuit board with a plurality of light emitting diodes (LEDs) installed to have a certain pattern thereon or mounted on a surface thereof is coupled to a frame.

With reference to FIGS. 1 and 2, a backlight 10 using a device for coupling a module circuit board with LEDs installed thereon and a frame includes the frame 20 for supporting a liquid crystal display panel 100, the module circuit board 40 which is coupled to the frame 20 by a coupling unit 30 to irradiate light to the liquid crystal display panel 100 and includes a plurality of LEDs 41 installed thereon, and a light guide plate unit 110 for irradiating light emitted from the LEDs 41 of the module circuit board 40 toward the liquid crystal display panel 100.

The foregoing elements of the backlight according to an embodiment of the present invention will be described in detail as follows.

The module circuit board 40, including a plurality of LEDs 41 formed with a certain pattern on a front surface thereof, may be configured as a metal printed circuit board (PCB). The module circuit board 40 may have a shape of a plate bar with a certain width. However, the module circuit board 40 may not be limited thereto; it may have any structure so long as it can irradiate light from the edge or the rear surface to the liquid crystal display panel 100.

When a main body of the module circuit board 40 is made of a metal plate, an insulating layer is formed on an upper surface of the module circuit board, an electrode line for supplying power to the respective LEDs is formed to have a certain pattern on the insulating layer, and components for driving the LEDs 41 may be installed on the electrode line.

The frame 20, which serves to support the liquid crystal display panel 100 and the backlight and fix the module circuit board 40, includes a main body 21 and a support barrier 22 formed continuously or discontinuously at the edge of the main body 21. The main body 21 and the support barrier 22 may be formed by mutually coupling a plate-like member constituting the main body 21 and members constituting the support barrier 22, or may be integrally fabricated. The frame is made of aluminum.

A heat dissipation unit 80 may be further provided at the frame 20 in order to dissipate heat generated from the LEDs.

As shown in FIGS. 2 to 4, the coupling unit 30 serves to couple the frame 20 and the module circuit board 40. A coupling recess 31 is formed in a lengthwise direction on a rear surface of the module circuit board 40, and a coupling member 35 to be coupled with the coupling recess 31 is formed on the frame 20 coupled with the module circuit board 40 or the support barrier 22. Here, the coupling member 35 may be formed on the module circuit board 40, and the coupling recess 31 may be formed on the support barrier 22 of the frame 20.

The coupling member 35 of the coupling unit 30 includes a protrusion 36 protruded from the frame 20 and a coupling projection 37 formed on at least one side of the protrusion 36. The coupling recess 31 includes an insertion portion 32 formed on the rear surface of the module circuit board 40, into which the coupling member 35 is inserted, and a coupling recess portion 33 extending from the insertion portion 32 and allowing the protrusion 36 of the module circuit board 40 to be caught thereby .

The section of the mutually coupled coupling recess 31 and the coupling member 35 may have one shape among a dovetail shape, a frustotriangular shape, a circular shape, a T shape, a lozenge shape, and a trapezoid shape.

It is described that the coupling member 35 is provided on the frame 20 and the coupling recess 31 is formed on the module circuit board 40, but the present invention is not limited thereto and the coupling recess may be formed on the frame and the coupling member may be formed on the module circuit board.

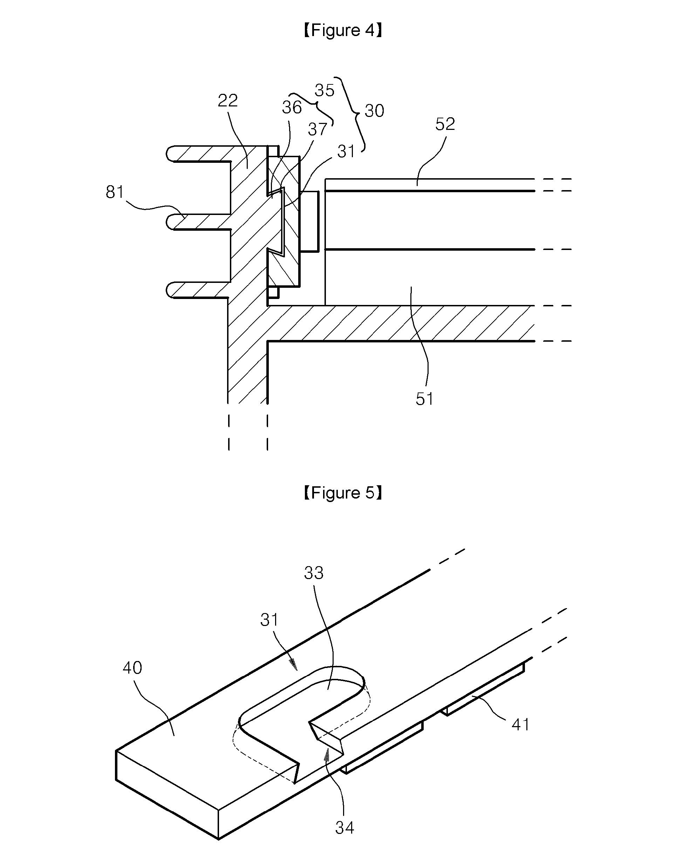

Meanwhile, as shown in FIG. 5, in a different embodiment of the insertion portion of the coupling recess 31 installed on the module circuit board 40, the insertion portion may be formed starting from the side of the module circuit board toward the coupling recess portion 33 in a right angle direction to the lengthwise direction of the module circuit board 40. In this case, preferably, the section of the insertion portion 34 may have the same shape as that of the section of the coupling recess portion 33.

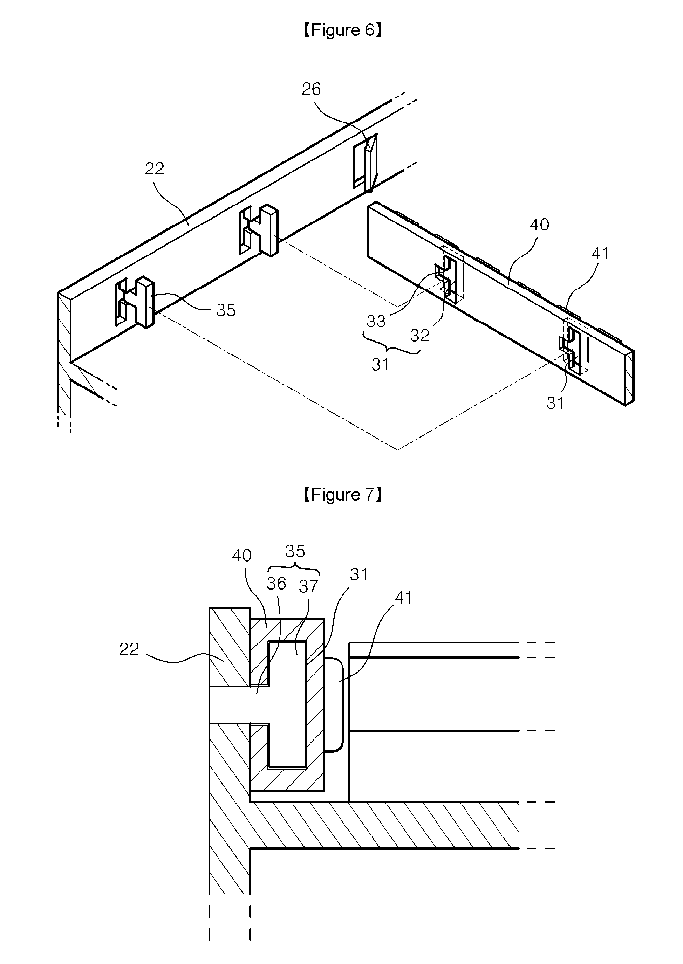

When the module circuit board 40 is formed of a thin film plate, the coupling member 35 may be lanced to be formed as shown in FIGS. 6 to 8. Namely, the module circuit board 40 or the support barrier 22 with the LEDs installed thereon, excluding portions (i.e., portions as a base of the coupling member), are punched, and the punched portions are bent in a coupling direction, thus forming the coupling member 35.

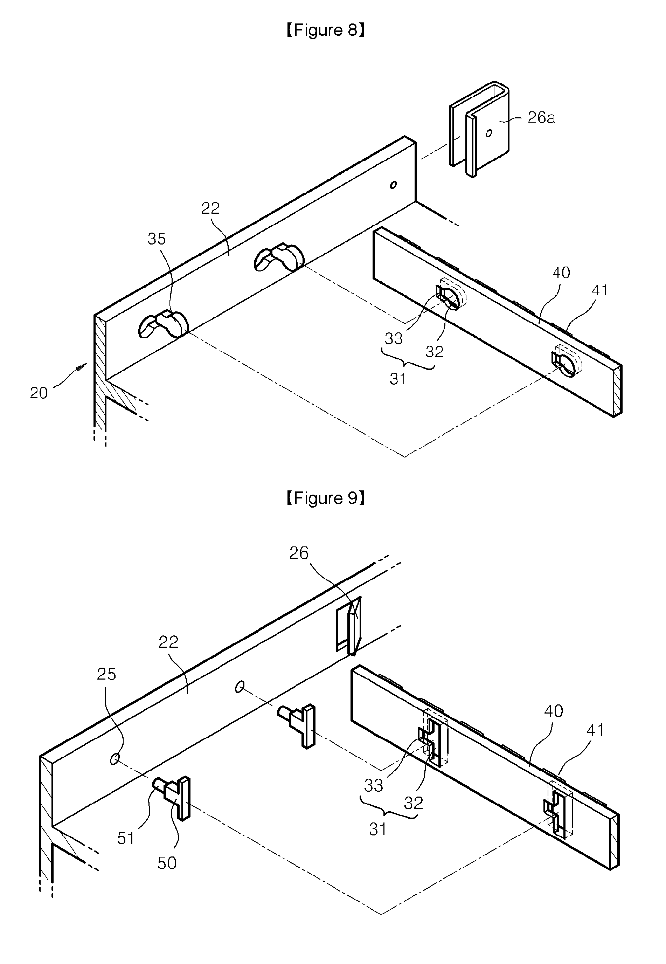

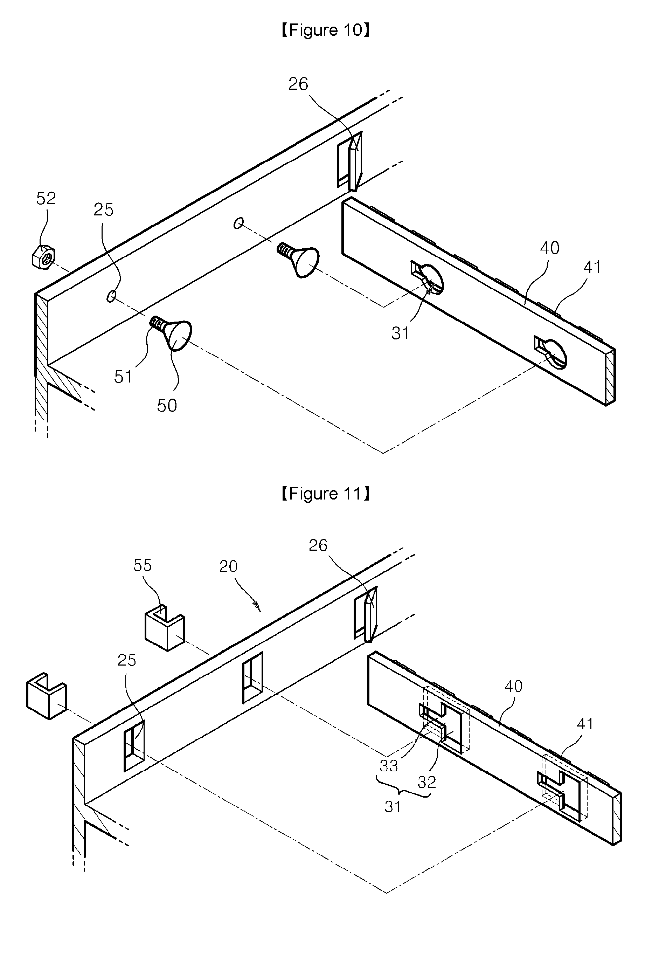

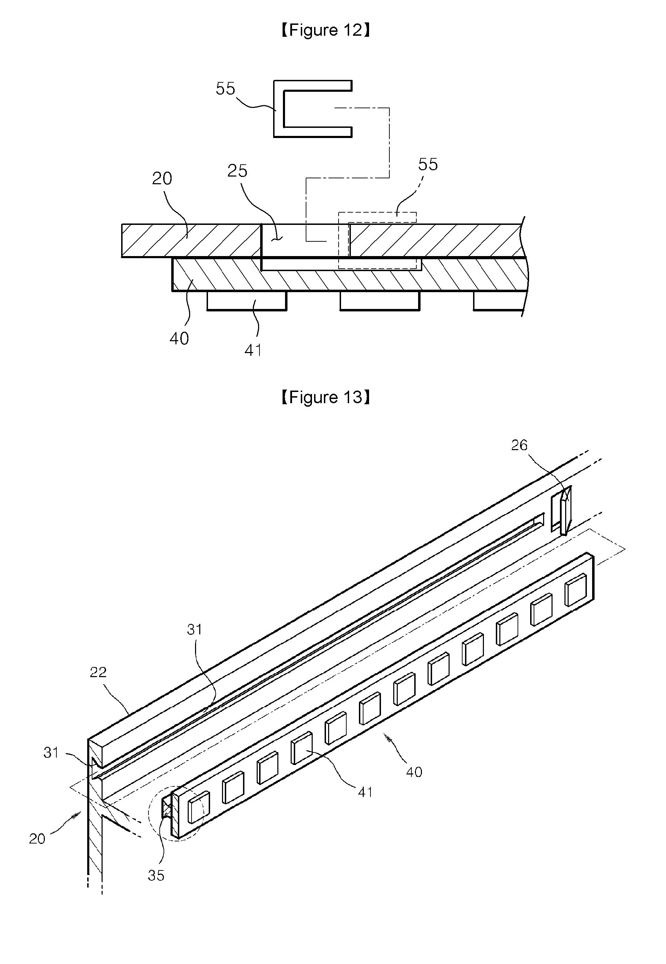

Also, as shown in FIGS. 9 and 10, a coupling member 50 may be separately fabricated and coupled with the frame 20. In this case, in order to couple the coupling member 50 to the frame 20, a through hole 25 is formed on the frame 20, and a base portion 51 of the separately fabricated coupling member 50 is press-fit to the through hole 25 or the base portion 51 inserted in the through hole 25 may be caulked or welded to thus couple the coupling member 50 to the frame 20. The base portion 51 of the coupling member 50 in a state of being coupled in the through hole 25 may be screw-coupled with a fixing member 52. The coupling member 50 may be separately fabricated but it has the same configuration as that of the foregoing embodiment. Meanwhile, as shown in FIGS. 11 and 12, the coupling member may be configured as a clip 55 coupling the coupling recess 31 and the frame 20. In this case, the through hole 25 formed on the frame 20 may have a lattice shape to allow the clip 55 to be inserted thereinto. The clip 55 may have a C-shape, and in this case, a portion of the clip 55 coupled with the coupling recess 31 may have the same sectional shape as that of the coupling recess 31. In the coupling by the clip 55, the frame 20 at the edge of the through hole 25 and the module circuit board 40 at the portion where the coupling recess 31 is formed are grasped through the through hole 25.

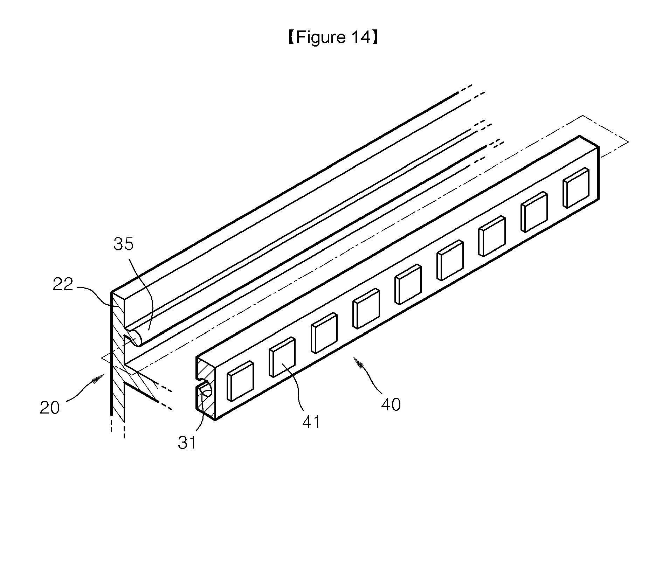

As shown in FIG. 13, the coupling recess may be continuously formed in the lengthwise direction of the frame 20, and the coupling member 35 may be continuously formed in the lengthwise direction of the module circuit board on the rear surface of the module circuit board 40. As shown in FIG. 14, the coupling recess 31 may be continuously formed in the lengthwise direction of the module circuit board 40, and the coupling recess 31 is continuously formed in the lengthwise direction of the module circuit board 40 on the rear surface of the frame 20, i.e., on the support barrier 22. In the above description, the case in which the coupling recess and the coupling member are continuously formed on the frame and the module circuit board is taken as an example, but the present invention is not limited thereto and the coupling recess and the coupling member may be discontinuously formed.

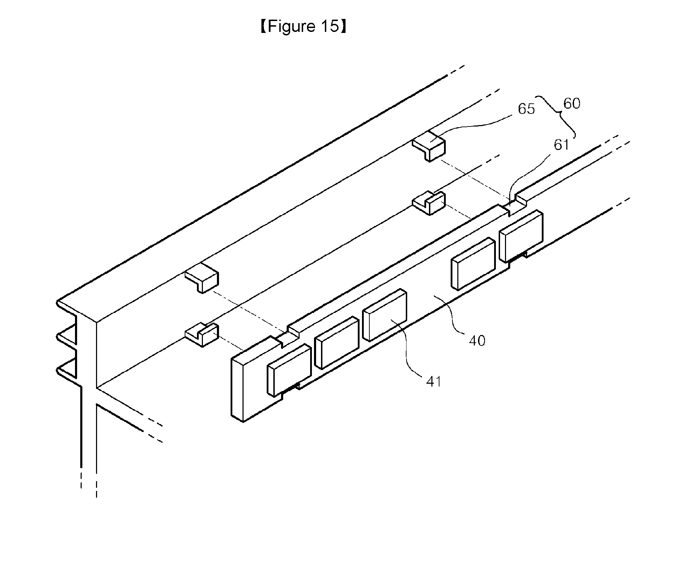

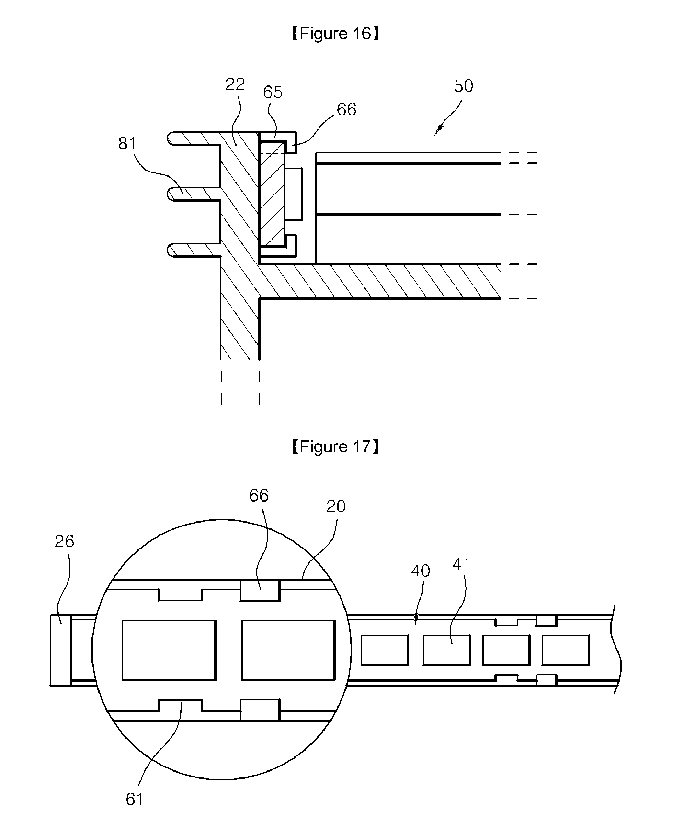

FIGS. 15 to 17 show other examples of the coupling unit coupling the module circuit board and the frame according to an embodiment of the present invention. Here, the same reference numerals as those of the former embodiment denote the same elements.

With reference to the drawings, in the device for coupling the module circuit board and the frame, a coupling unit 60 includes lead-in recesses 61 formed for a coupling at both side face portions in the lengthwise direction of the module circuit board 40 having a bar-like shape on which LEDs are installed to have a certain pattern, and coupling hooks 65 formed on the frame 20 corresponding to the lead-in recesses 61 such that they are inserted into the lead-in recesses 61 so that the edge of the side face of the module circuit board 40 is caught when the module circuit board 40 is moved.

The coupling hook 65 includes a stopping protrusion 66 formed inwardly at an end portion thereof to support the edge of the module circuit board 40.

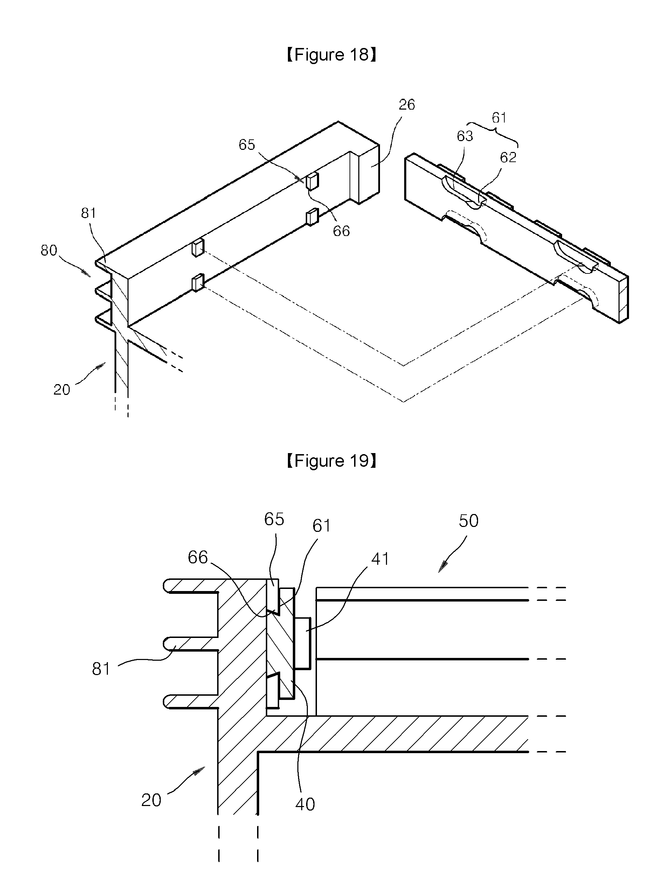

As shown in FIGS. 18 to 21, the lead-in recess 61 includes an insertion portion 62 formed on a side face of the module circuit board 40, into which the coupling hook 65 is inserted, and a stopping recess portion 63 extending from the insertion portion 62 so as to be formed at the edge of an upper surface of the module circuit board 40, into which the stopping protrusion 66 is inserted to be caught. Preferably, the stopping recess portion 63 is formed to have a certain depth such that an end portion of the stopping hook 65 is not protruded in a state in which the stopping protrusion 66 of the coupling hook 65 is caught therein.

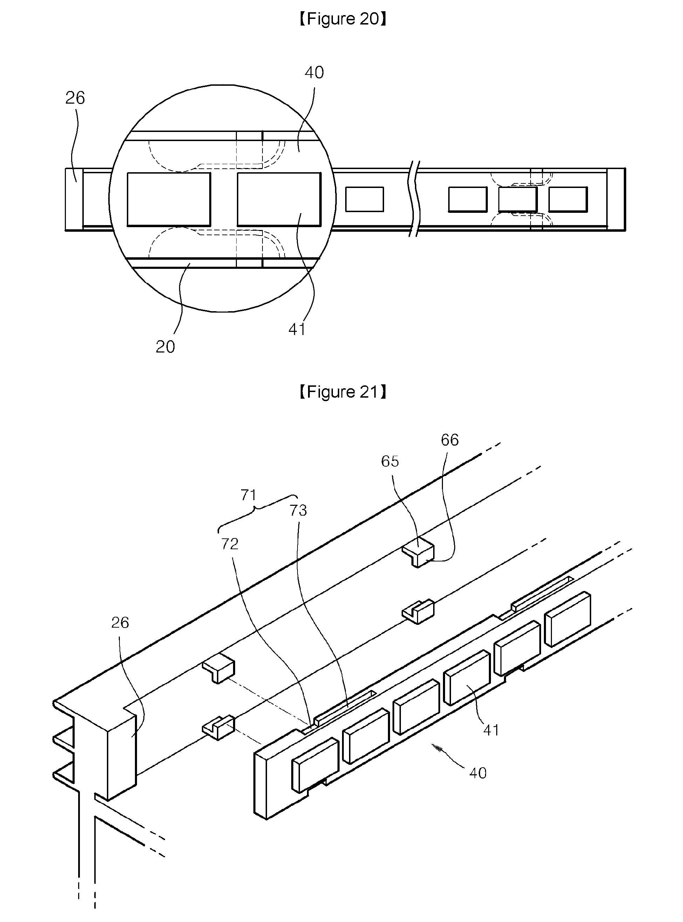

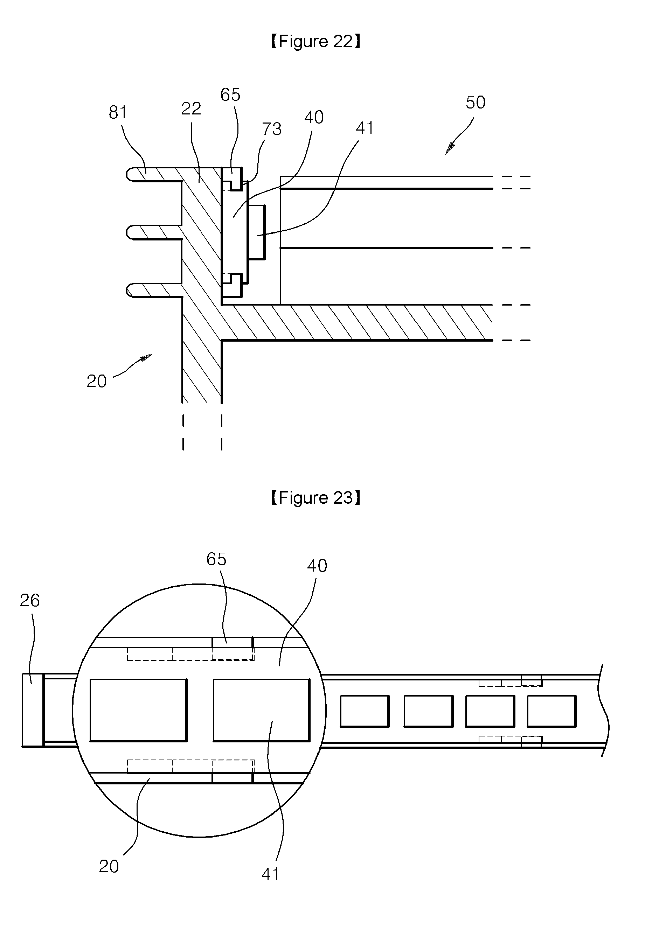

As shown in FIGS. 21 to 23, a lead-in recess 71 includes an insertion portion 72 formed at the side of the module circuit board 40 such that it does not traverse the side from the edge of the rear surface, and a stopping recess portion 73 formed to extend in a lengthwise direction on the side of the module circuit board 40 to allow the stopping protrusion 66 to be insertedly caught therein. Here, the coupling recess portion 73 may be formed to have a width which is narrow and then wide as it becomes away from the insertion portion 72, so that the stopping protrusion 66 may not be easily separated after being inserted in the coupling recess portion 73.

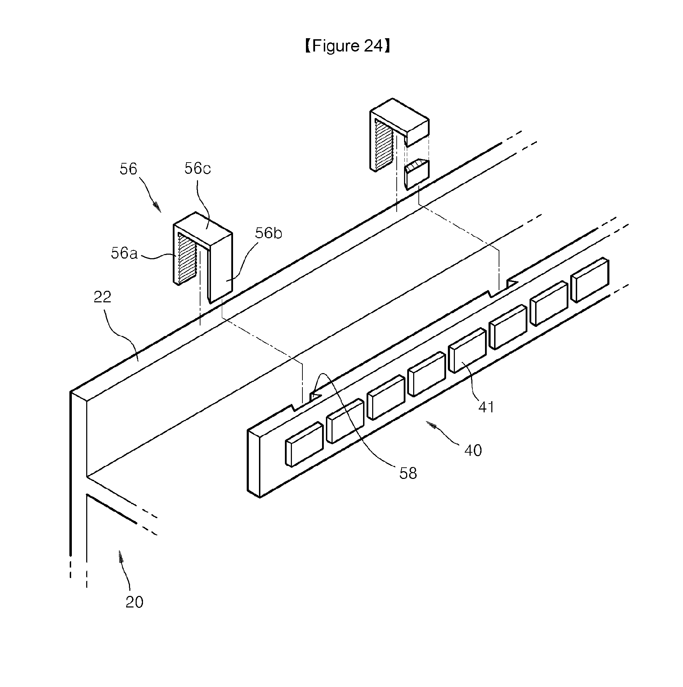

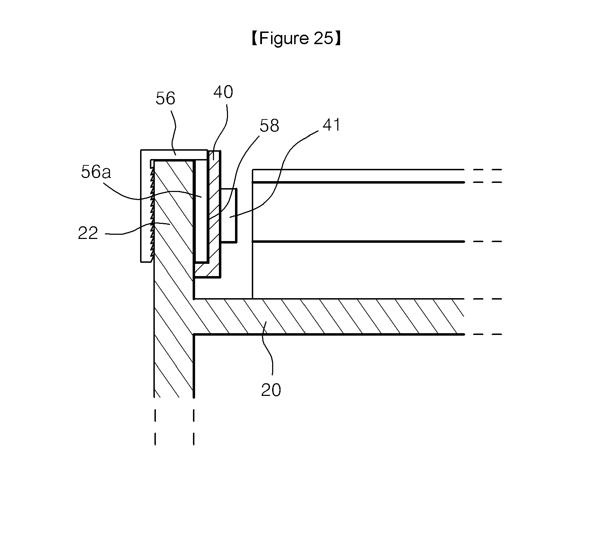

FIGS. 24 and 25 show other examples of the coupling unit coupling the module circuit board and the frame according to an embodiment of the present invention.

With reference to FIGS. 24 and 25, the coupling unit includes a fixing clip 56 coupling a coupling recess 58 formed on the rear surface of the module circuit board 40 and the support barrier 22 of the frame 20 in a state in which the module circuit board 40 is tightly attached to the support barrier 22.

The fixing clip 56 includes a first fixing coupling portion 56a coupled to the side of the support barrier 22, a second fixing coupling portion 56b coupled to the coupling recess 58, and a fixing connection portion 56c connecting end portions of the first and second fixing coupling portions 56a and 56b.

The coupling recesses 58 formed on the rear surface of the module circuit board 40 are formed in a direction of a normal to the lengthwise direction of the module circuit board 40, and the section of the coupling recess 58 and the section of one fixing coupling portion 56a of the fixing clip 56 have a dovetail shape (See FIGS. 24 and 25). A depression and a protrusion (or an irregular portion) is formed on an inner face of the first fixing coupling portion 56a, namely, on an inner face in contact with the support barrier 22, in order to increase frictional force. In the process of fixing as mentioned above, a double-sided tape may be installed on the rear surface of the module circuit board 40 and the support barrier 22 in order to attach them.

As for the coupling unit configured as described above, in a state in which the module circuit board 40 is tightly attached to the support barrier 22, the fixing clip 56 is coupled such that the first fixing coupling portion 56a of the fixing clip 56 is tightly attached to the side of the support barrier and the second fixing coupling portion 56b is coupled to the coupling recess 58, thereby fixing the module circuit board 40 to the frame 20.

Meanwhile, in the foregoing embodiments, a stopper 26 is formed on the frame 20 in order to prevent the module circuit board 40 from moving in a direction in which the module circuit board 40 is separated with respect to the frame 20 (i.e., in a direction in which the coupling hook or the coupling member moves toward the insertion portion in a state in which the frame 20 and the module circuit board 40 are coupled) when the frame 20 and the module circuit board 40 are coupled.

Preferably, the stopper 26 is protruded from the frame 20 to support the edge of the end portion of the module circuit board 40.

In the foregoing embodiments, the heat dissipation unit 80 for dissipating heat generated from the LEDs installed on the module circuit board 40 may include heat dissipation pins 81 installed on the barrier rib 22 of the frame 20. As another example of the heat dissipation unit, a heat pipe may be installed on the frame 20. When the heat dissipation unit is formed as a heat pipe, a heat receiving portion of the heat pipe may be positioned at a region from which heat is generated and the heat dissipating portion may be installed on the frame relatively separated from the heat receiving portion.

The heat dissipation pins 81 may be integrally formed with the module circuit board 40 or the frame 20, or may be formed by lancing the module circuit board 40 and the frame 20. Although not shown, the heat dissipation unit may be configured as an air current passage formed in a lengthwise direction on the support barrier. The air current passage may maximize a cooling effect by smoothing a flow of an air current by a chimney effect.

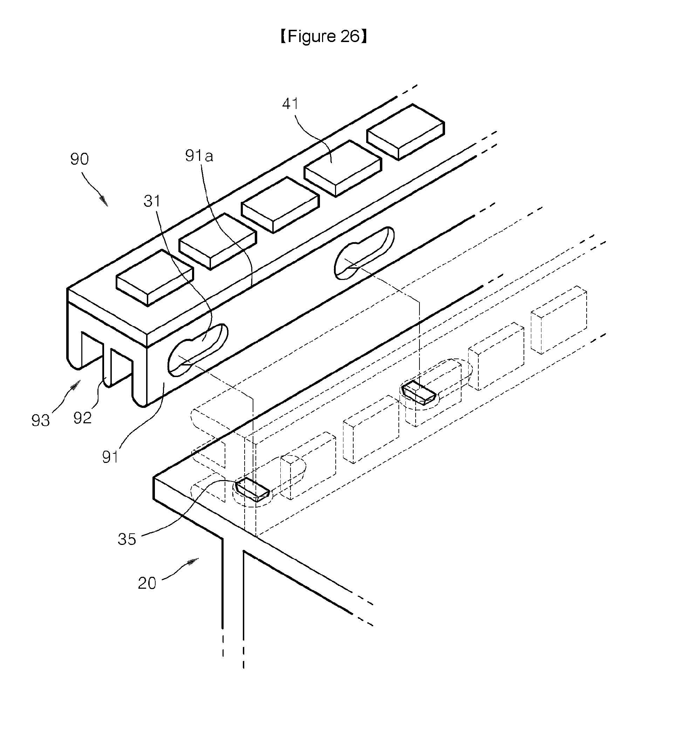

Meanwhile, FIGS. 26 to 28 show other examples of the device for coupling the module circuit board and the frame. Here, the same reference numerals as those of the former embodiment denote the same elements.

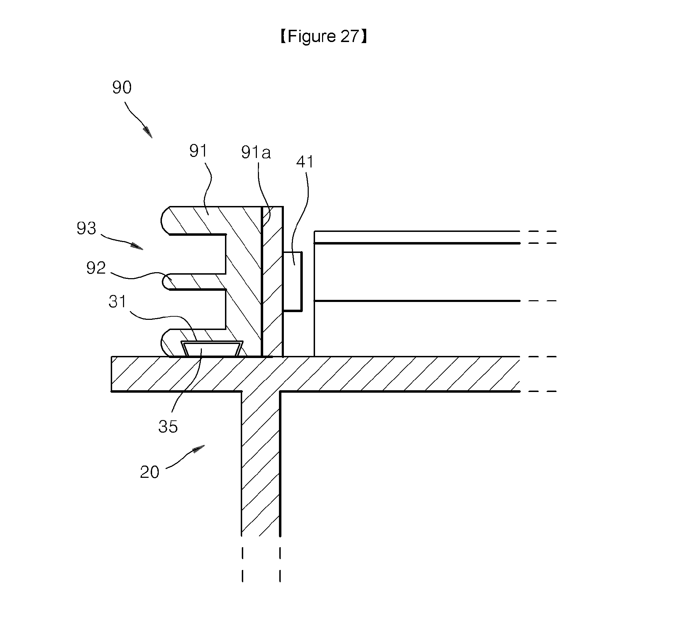

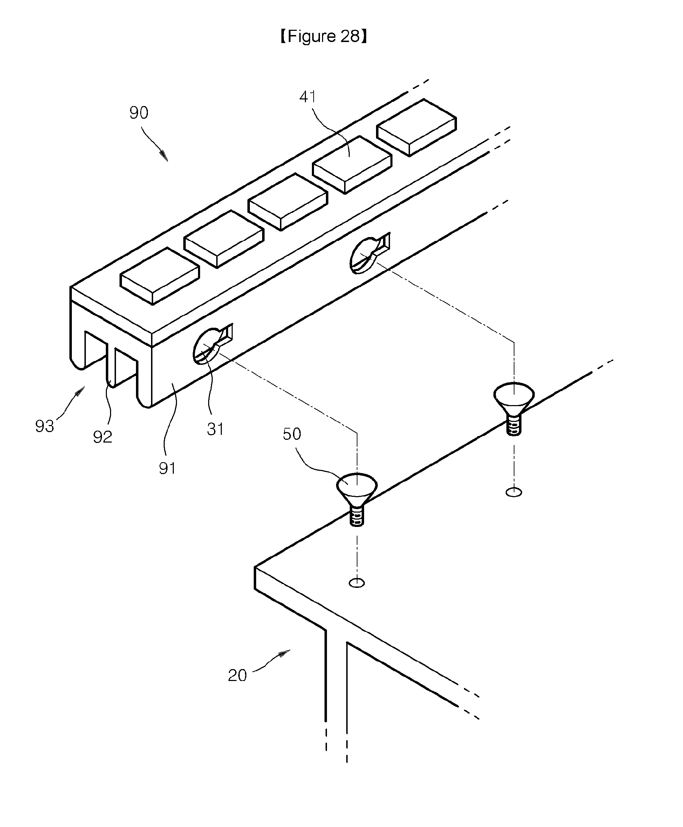

With reference to FIGS. 26 to 28, a module circuit board 90 may include a board unit 91 on which the LEDs 41 are installed, and a heat dissipation unit 93 integrally formed on a rear surface of the board unit 91 and including heat dissipation fins 92. An insulating layer 91 for insulation is formed on the board unit 91 on which the LEDs 41 are installed, and a certain circuit pattern is formed on an upper surface of the insulating layer 91 a. The circuit pattern may be formed by etching a copper foil, and is connected with the LEDs 41. The thusly configured module circuit board 90 is coupled with the frame 20 by a coupling unit 30. As described in the foregoing embodiments, the coupling unit 30 may include coupling recesses 31 formed on a side face of the module circuit board 90 and coupling members 35 coupled in the coupling recesses (See FIGS. 26 and 27). As shown in FIG. 28, the coupling member 50 may be separately fabricated and coupled to the frame 20.

In another embodiment of the coupling unit, as shown in FIG. 28, coupling holes 95 are formed on a lower face of the heat dissipation unit 93 of the module circuit board 90, and stopping hooks 96 are formed on the frame 20 and coupled with the coupling holes 95. The coupling unit may be configured as a set screw coupling the module circuit board 90 and the frame 20.

Although not shown in detail on the drawings, the liquid crystal display panel 100 is configured to include glass substrates coupled to form an injection space in which liquid crystal is to be injected, electrodes and an alignment film formed on the mutually opposed sides of the glass substrates, and liquid crystal injected therebetween. The liquid crystal display panel 100 may further include a color filter layer to implement a color image.

The light guide plate unit 110 irradiates light emitted from the LEDs 41 of the module circuit board 40 toward the rear surface of the liquid crystal display panel 100. The light guide plate unit 110 may include a light guide plate 111 including a reflection pattern and a diffusion pattern formed on a rear surface thereof and a diffusion plate 112 coupled with the light guide plate 111. Also, a separate diffusion pattern for diffusing light may be formed on a side face corresponding to the LEDs of the LED module board.

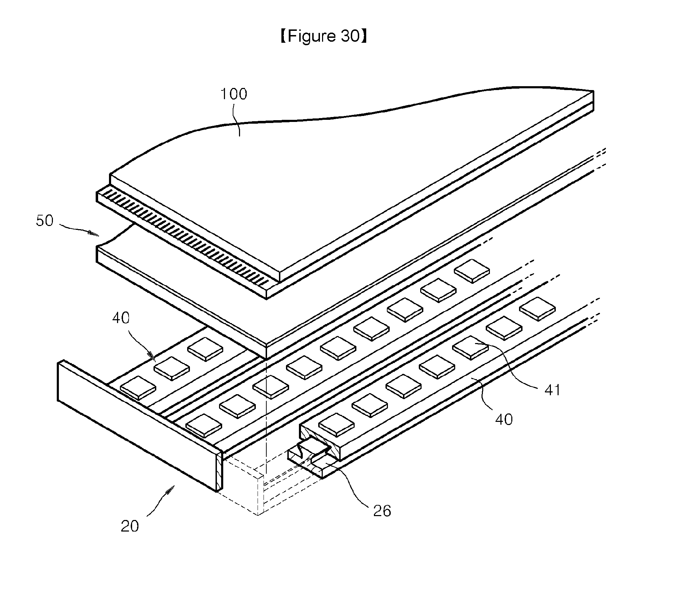

FIG. 30 shows a device for coupling the LED module board and a sash and another example of the backlight using the same according to an embodiment of the present invention. The same reference numerals as those of the former embodiment denote the same elements.

With reference to FIG. 30, the backlight according to an embodiment of the present invention may be a direct type backlight for irradiating light from the rear surface of the liquid crystal display panel 100. In this case, a support portion 26 may be further provided to form the coupling member 35 of the coupling unit on the frame 200 corresponding to a lower surface of the liquid crystal display panel 100. In the direct type backlight, the coupling unit for fixing the module circuit board 40 to the support portion 26 of the frame 20 has the same structure as that of the foregoing embodiment, so a description thereof will be omitted.

As described above, in the device for coupling the module circuit board and the frame and the backlight using the same according to an embodiment of the present invention, the coupling recess 31 formed on the module circuit board 40 is moved in a state in which the coupling member 35 formed on the support barrier 22 is inserted therein to allow the coupling protrusion 37 of the coupling member 35 to be coupled in the coupling recess portion 33 of the coupling recess 31, thereby coupling the frame 20 and the module circuit board 40. And, the end portion of the coupling-completed module circuit board 40 is supported by a stopper to fix the coupling position of the module circuit board 40 with respect to the frame 20.

In the process of coupling as described above, when the insertion portion is formed to extend from the side of the module circuit board as shown in FIG. 5, the coupling member 35k in state of being coupled in the insertion portion, is moved in the direction of a normal in the lengthwise direction and then moved along the coupling recess portion 33 so as to be fixed.

As shown in FIGS. 15 to 23, when the insertion portion 61 is formed on the side face of the module circuit board 40 and the coupling hook 65 is formed on the corresponding frame 20, the module circuit board 40 is moved in a state in which the coupling hook 65 is inserted in the insertion portion 61 or 72 so that the stopping protrusion 66 of the hook can be positioned on the upper surface of the module circuit board 40 or in the stopping recess portion 63 or 73 so as to be coupled. As described above, when the movement of the module circuit board is completed, the end portion of the module circuit board 400 is supported by the stopper, and accordingly, the coupling position is fixed.

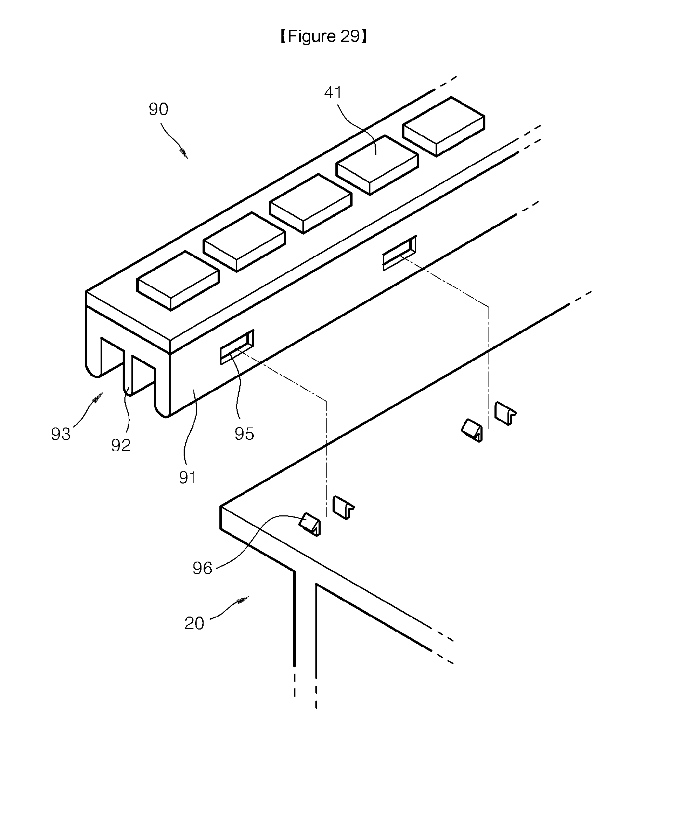

Meanwhile, as shown in FIGS. 26 to 29, the board unit and the heat dissipation unit of the module circuit board 90 are integrally formed, heat generated by the LEDs 41 can be easily dissipated.

As described above, the device for coupling the frame and the module circuit board simply couples the frame and the module circuit board, improving the productivity, and can prevent the module circuit board from wobbling with respect to the frame. Also, since the frame or the module circuit board includes the heat dissipation fins, heat generated from the LEDs installed on the module circuit board can be easily discharged, thus preventing a degradation of the LEDs.

The present invention has been described with reference to embodiments illustrated in the drawings, but a skilled person in the art can easily understand that various modifications and equivalent embodiments can be made.

Thus, the true coverage of the present invention should be determined by the appended claims.

### [Industrial Applicability]

The device for coupling the LED module board and the sash and the backlight using the same can be applicable as a backlight of an advertisement board, as well as a backlight unit of various liquid crystal display devices.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A device for coupling a module circuit board and a frame, comprising:
a module circuit board on which light emitting diodes (LEDs) are installed to have a certain pattern; and
a frame coupled with the module circuit board by a coupling unit,
wherein the coupling unit comprises coupling recesses formed on a rear surface of the module circuit board and coupling members formed on the frame and coupled with the coupling recesses.

2. The device for coupling a module circuit board and a frame of claim 1, wherein the coupling member comprises a protrusion protruded from the frame and a coupling projection formed on at least one side of the protrusion, and
the coupling recess installed on the module circuit board comprises an insertion portion into which the coupling member is inserted and a stopping recess portion extending from the insertion portion in one direction and allowing the protrusion to be caught therein.

3. The device for coupling a module circuit board and a frame of claim 1, wherein a section of the mutually coupled coupling member and coupling recess has any one shape among a frustotriangular shape, a circular shape, a T shape, a lozenge shape, and a trapezoid shape.

4. The device for coupling a module circuit board and a frame of claim 1, wherein a stopper is provided on the frame to fix the coupling position of the module circuit board.

5. The device for coupling a module circuit board and a frame of claim 1, wherein the coupling member comprises a coupling hole formed on the module circuit board and a base portion of the coupling member which is separately fabricated and inserted in the coupling hole.

6. The device for coupling a module circuit board and a frame of claim 1, wherein the coupling member and the coupling recess are continuously or discontinuously formed.

7. The device for coupling a module circuit board and a frame of claim 2, wherein the insertion portion of the coupling recess is formed from the side surface of the module circuit board at a right angle direction with respect to a lengthwise direction of the module circuit board, and the coupling recess portion is formed in the lengthwise direction.

8. The device for coupling a module circuit board and a frame of claim 1, wherein the frame comprises a heat dissipation fin.

9. The device for coupling a module circuit board and a frame of claim 1, wherein the frame comprises a heat pipe for dissipating heat discharged from the LEDs.

10. The device for coupling a module circuit board and a frame of claim 1, wherein the coupling unit comprises a fixing clip coupling a coupling recess formed on the rear surface of the module circuit board and the support barrier of the frame in a state in which the module circuit board is tightly attached to the support barrier.

11. A device for coupling a module circuit board and a frame, the device comprising:
a module circuit board including light emitting diodes (LEDs) formed to have a certain pattern and a frame coupled with the circuit board by a coupling unit,
wherein the module circuit board comprises a board unit on which the LEDs are installed and a heat dissipation unit including heat dissipation fins formed on a rear surface of the board unit, the board unit and the heat dissipation unit being integrally formed, and
the coupling unit comprises coupling recesses formed on a side surface of the module circuit board and coupling members formed on the frame and coupled with the coupling recesses.

12. A device for coupling a module circuit board and a frame comprising:
a module circuit board having a bar-like shape and having light emitting diodes (LEEDs) installed to have a certain pattern; and a frame coupled with the module circuit board by a coupling unit,
wherein the coupling unit comprises lead-in recesses for a coupling and formed on both side surface portions in a lengthwise direction of the module circuit board and coupling hooks provided on the frame corresponding to the lead-in recesses and inserted in the lead-in recesses to allow a side edge of the module circuit board to be caught therein when the module circuit board is moved.

13. The device for coupling a module circuit board and a frame of claim 12, wherein a stopper is provided on the frame to fix the coupling position of the module circuit board.

14. The device for coupling a module circuit board and a frame of claim 12, wherein the coupling hooks comprise a stopping protrusion formed at a mutually corresponding inner side, and
the lead-in recess formed on the side face portion of the module circuit board may comprise an insertion portion in which the coupling hook is inserted and a stopping recess extending from the insertion portion in one direction and allowing the stopping protrusion to be insertedly caught therein.

15. The device for coupling a module circuit board and a frame of claim 12, wherein a heat dissipation fin or a heat pipe is installed on the frame in order to dissipate heat generated from the LEDs.

16. A backlight using a device for coupling a module circuit board and a frame, the backlight comprising: a frame for supporting a liquid crystal display panel; a module circuit board coupled with the frame and including a plurality of light emitting diodes (LEDs) to irradiate light to the liquid crystal display panel; a coupling unit for coupling the module circuit board and the frame; and a light guide plate unit irradiating light emitted from the LEDs of the module circuit board, toward the liquid crystal display panel,
wherein the coupling unit comprises coupling recesses formed on a rear surface of the circuit board and coupling members formed on the frame and coupled with the coupling recesses.

17. The backlight using a device for coupling a module circuit board and a frame of claim 16, wherein the coupling member comprises a protrusion protruded from the frame and a coupling projection formed on at least one side of the protrusion, and
the coupling recess installed on the module circuit board comprises an insertion portion into which the coupling member is inserted and a stopping recess portion extending from the insertion portion in one direction and allowing the protrusion to be caught therein.

18. A backlight using a device for coupling a module circuit board and a frame, the backlight comprising: a frame for supporting a liquid crystal display panel; a module circuit board coupled with the frame and including a plurality of light emitting diodes (LEDs) to irradiate light to the liquid crystal display panel; a coupling unit for coupling the module circuit board and the frame; and a light guide plate unit irradiating light emitted from the LEDs of the module circuit board, toward the liquid crystal display panel,
wherein the coupling unit comprises lead-in recesses for a coupling and formed on both side surface portions in a lengthwise direction of the module circuit board and coupling hooks provided on the frame corresponding to the lead-in recesses and inserted in the lead-in recesses to allow a side edge of the module circuit board to be caught therein when the module circuit board is moved.
